# EUROPEAN PATENT APPLICATION

(11) **EP 2 275 727 A1**
(43) Date of publication of application: **19.01.2011**
(21) Application number: 08741590.7
(22) Date of filing: 19.03.2008
(51) Int. Cl.: F16K 17/30, G05D 7/01

(54) **NEEDLE-TYPE STEPPED CYLINDRICAL STOPPER FOR AUTOMATIC CONTROL OF WATER CONSUMPTION IN PIPELINES**

(71) Applicant: Faraon Chaul Huerta, Adma Elena, CP. 11500 DF. (MX)
(72) Inventor: Faraon Chaul Huerta, Adma Elena, CP. 11500 DF. (MX)
(74) Representative: Pons Ariño, Angel
(86) International application number: PCT/MX2008/000043
(87) International publication number: WO 2009/116846

(57) **Abstract**

The invention in question relates to a needle-type stepped cylindrical stopper for automatic control of water consumption in pipelines, of two types, each type having two sections for automatically controlling water consumption, irrespective of the water pressure in the line or when the taps are opened, for use in automatic water-saving devices and pressure-sensitive flow controllers, such as to enable, with a single automatic water-saving device, incorporating the needle-type stepped stopper of this invention, automatic control of minimum water consumption, from 4.0 liters per minute as a minimum at a maximum static pressure of 0.2 kilograms per square centimeter up to a maximum water consumption of 10.0 liters per minute at a maximum static pressure of 6.0 kilograms per square centimeter. With the automatic water-saving device and pressure-sensitive fluid controller, incorporating the needle-type stepped cylindrical stopper of the invention in question, of two types, it is no longer necessary to use various designs of restrictors or use various different water-saving devices to control water consumption according to the water pressure in the line or the opening of the taps for low, medium and high static pressure.

## Description

### FIELD OF THE INVENTION

The Needle-type stepped cylindrical stopper for automatic control of water consumption in pipelines is in the field of technologies that allow the handling and control of fluid flow, especially water, in both industrial use and the important domestic use.

### OBJECT OF THE INVENTION

The object of the present invention is to provide a device that has a needle-type mechanism for automatic control of water consumption in pipelines for use in automatic water saving devices. Another object of the invention is that this development can be used in pressure-sensitive flow controllers, so that with a single water saver the water consumption can be automatically controlled.

### BACKGROUND

Pressure-sensitive water saving devices as Mexican Patent Number 161751 and Mexican Patent Number 180756 and patents in other countries, do not meet with the object of supplying with a single water saver and flow controller, irrespective of the water pressure in the line or the opening of the taps, a minimum water consumption of 4.0 liters per minute at a minimum static pressure of 0.2 kilograms per square centimeter, and providing a maximum water consumption of 10.0 liters per minute at a maximum static pressure of 6.0 kilograms per square centimeter. Because of the stopper design, they do not meet the minimum and maximum consumption; they only meet the water consumption in low, medium or high pressure. In the above mentioned patents, the cylindrical stopper is flat on the upper part and causes a high pressure drop and loss of flow at low static pressure, therefore do not meet the minimum water consumption, they only meet the specific water consumption for which were designed; for this reason the needle-type stepped cylindrical stopper of the present invention was developed, which in its two design embodiments has two sections in each one, that combined automatically control water consumption from low to high static pressure, irrespective of the water pressure in the pipeline or the opening of the taps. The existing water saving devices are not automatic and in order to provide a specific water consumption according to water pressure in the pipeline, they use different designs of flow restriction devices or manual flow controllers, that only serve to a certain pressure and consumption with the risk of consuming more water than the necessary specified for low, medium or high pressure. With current designs of restriction devices, the water consumption can not be automatically controlled, varying the same according to the water pressure in the pipeline and the opening of the taps; once the design of water restriction device has been calibrated to provide a consumption depending on pressure and opening of the taps, increase or decrease the water pressure in the pipeline and varying the opening of the taps or manually moving the water saving device, the water consumption is increased or decreased considerably.

Because of the above mentioned, the needle-type stepped cylindrical stopper was developed, which in its two design embodiments has two sections in each one, that combined automatically control water consumption from low to high static pressure, irrespective of the water pressure in the pipeline or the opening of the taps.

### DESCRIPTIONOF THE INVENTION

The novel and characteristic aspects of the present invention specifically refer to a needle-type stepped cylindrical stopper for automatic control of water consumption in pipelines in two embodiments, which have two sections in each one, that combined automatically control water consumption from low static pressure to medium static pressure and from medium static pressure to high static pressure, irrespective of the water pressure in the pipeline or the opening of the taps for use in automatic water saving devices and pressure-sensitive flow controller.

### EMBODIMENTS OF THE INVENTION

In one embodiment of the needle-type stepped cylindrical stopper design of the present invention, there is an upper section comprising two inclined symmetrical lateral planes beginning at the step of the Needle-type stepped cylindrical stopper and ending in a flat section of 2-3 millimeters wide, having a flange to retain a conical spring that prevents a high pressure drop and flow loss in low static pressure; in the two inclined symmetrical lateral planes there are two slots which combined with the diameter of the lower needle and the diameter of the fluid output hole, control the water consumption from a medium static pressure of about 1.0 kilograms per square centimeter with a minimum water consumption of 4.0 liters per minute to high static pressure of 6.0 kilograms per square centimeter with a maximum water consumption of 10.0 liters per minute, furthermore, in the lower section of the needle-type stepped cylindrical stopper there is a needle which combined with the upper flat section of 2-3 millimeters wide as maximum resulting from the two inclined symmetrical planes with back pressure of the conical spring and the flow pressure, the water consumption is controlled from low static pressure to medium static pressure.

In another embodiment of the needle-type stepped cylindrical stopper design, there are two needles, an upper needle which combined with lower needle automatically control the water consumption from a low static pressure of 0.2 kilograms per square centimeter with a minimum water consumption of 4.0 liters per minute to medium static pressure of 1.0 kilograms per square centimeter with a minimum water consumption of 4.0 liters per minute, the upper needle having two symmetrical lateral slots at 180 degrees and almost at the tip thereof is a box or slot to retain a conical spring; due to the back pressure of the conical spring combined with the flow pressure, the diameter of the upper needle and the diameter of the lower needle, there is less pressure drop and flow loss at low static pressure, allowing a minimum water consumption greater to 4.0 liters per minute at a minimum static pressure of 0.2 kilograms per square centimeter in order to provide more comfort to the user without exceeding the necessary maximum water consumption. Using needle-type stepped cylindrical stopper of the present invention, when in the pipeline a medium static pressure of approximately 1.0 kilograms per square centimeter has been achieved, the step of the Needle-type stepped cylindrical stopper in its two embodiments comes into contact with a flow controller washer and at this time the water consumption automatically decrease to no less than 4.0 liters per minute and as the static water pressure on the pipeline and the opening of the taps is increased to more than 1.0 kilograms per square centimeter, the water consumption automatically increases to achieve a maximum water consumption of 10.0 liters per minute at maximum static pressure of 6.0 kilograms per square centimeter regardless the opening of the taps. In the two embodiments of the needle-type stepped cylindrical stopper there are two outer slots that combined with the diameter of the fluid output hole of a flow controller washer and the diameter of the lower needles, the minimum water consumption of 4.0 liters per minute at medium static pressure of approximately 1.0 kilogram per square centimeter is controlled, and as the water pressure in the pipeline and the opening of the taps increase to more than 1.0 kilograms per square centimeter, the water consumption is increased automatically and proportional up to reach a maximum consumption of 10.0 liters per minute at static pressure of 6.0 kilograms per square centimeter and in all intermediate static pressures irrespective of the opening of the taps, allowing the use of a single automatic water saver and pressure-sensitive flow controller having the needle-type stepped cylindrical stopper of the present invention incorporated therein, for low, medium and high pressure. In the first embodiment of the needle-type stepped cylindrical stopper there is a lower needle and two inclined symmetrical lateral upper planes beginning at the step of the stepped cylindrical stopper and terminate in a flat section of a maximum of 2-3 millimeters width having a flange that serves as a stop for a conical spring which together with the back pressure of the spring, the diameter of the lower needle and the flat section of 2-3 millimeters wide of resulting maximum from the two inclined symmetrical planes, avoid the high pressure drop and flow loss at low static pressure. In the two inclined symmetrical planes and in the upper needle of the second embodiment of the needle-type stepped cylindrical stopper there are two symmetric outer slots at 180 degrees from one another to control the passage of water from medium static pressure to high static pressure. With a single automatic water saver and flow controller device which incorporates any embodiment of the needle-type stepped cylindrical stopper of the present invention, the water is saved and the flow is controlled automatically irrespective of the water pressure in the pipeline or the opening of the taps, as the water pressure in the pipeline and the opening of the taps increase, the water flow automatically increases and the Needle-type stepped cylindrical stopper in its two embodiments is entrained by the fluid to the flow controller washer and the lower needle is introduced into the fluid outlet hole of the flow controller washer. The needle-type stepped cylindrical stopper of the present invention in its two embodiments each have two sections that combined automatically control the water consumption from low static pressure to medium static pressure, and from medium static pressure to high static pressure, the sections beginning with the upper flat section of 2-3 millimeters wide as maximum resulting from the two inclined symmetrical planes or from the tip of the section of 2-3 millimeters as maximum of the upper needle. The other flow control section, controls the water consumption from a medium static pressure of approximately 1.0 kilograms per square centimeter to high static pressure, which starts with the step of the needle-type stepped cylindrical stopper, with the needle and the two slots in the two inclined symmetrical planes, that being into contact the step of the needle-type stepped cylindrical stopper with the flow controller washer, the water consumption starts to be controlled from medium static pressure to high static pressure. With the needle-type stepped cylindrical stopper in its two embodiments combining the back pressure of the conical spring, the diameter of the fluid output hole in the flow controller washer and the two inclined symmetrical upper planes, the water consumption is automatically controlled from a low static pressure of 0.2 kilograms per square centimeter to medium static pressure of approximately 1.0 kilogram per square centimeter and with the combination of the two external lateral slots that are in the upper needle with the hole of the flow controller washer and the diameter of the lower needle, the water consumption is controlled at medium static pressure and from medium static pressure to high static pressure irrespective of water pressure in the pipeline or the opening of the taps to comply with a controlled water consumption. Using manual flow restrictors or controllers there is always the risk of using one product for another, and consume more water than necessary, while with automatic savers and pressure-sensitive flow controllers having the needle-type stepped cylindrical stopper of the present invention embedded in either of its two embodiments, it would be used a single water saver to automatically control the water consumption at all the static pressures without risk of error and its operational structure, design, parts and manufacturing materials can be used together or separately to provide an automatic water saving and flow controller device, and the many possible changes, substitutions and additions will be apparent to specialists and experts, provided that does not change the scope of the novelty of the present invention, will be better understood in the following description of the drawings supplied by way of illustration but not limiting of the desired protection, using the same reference signs to indicate parts and functioning.

### DESCRIPTION OF THE FIGURES

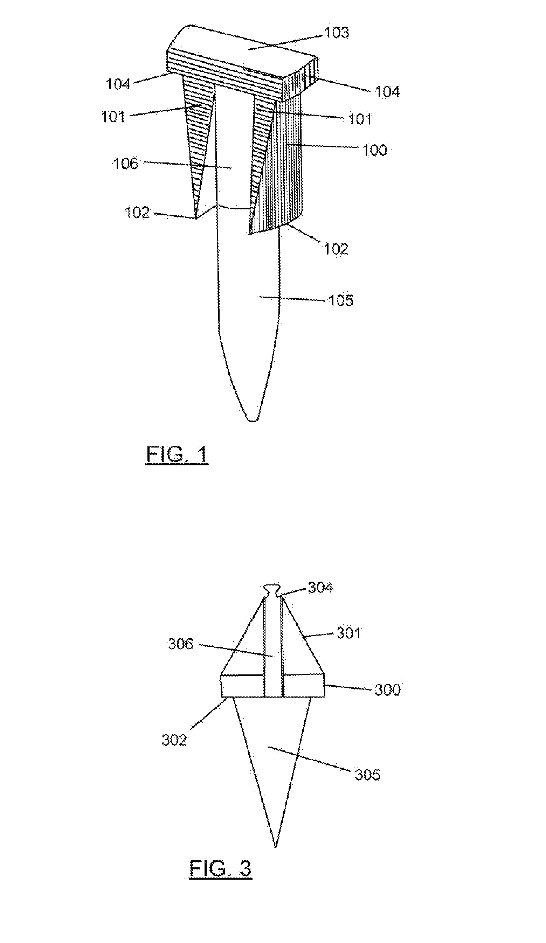

Figure 1 shows a side view of the needle-type stepped cylindrical stopper (100) for automatically controlling the water consumption in pipelines for use in automatic water savers and pressure-sensitive flow controllers. In one embodiment the needle-type stepped cylindrical stopper (100) has in the lower section a needle (105) and in the upper section has two inclined symmetrical lateral planes (101) which begin at the step (102) of the needle-type stepped cylindrical stopper (100) and ending in a flat section (103) of 2-3 millimeters wide as maximum, which has the flange (104) that serves as stop of a conical spring (204). The upper section has two outer slots (106) one on each inclined symmetrical lateral plane (101).

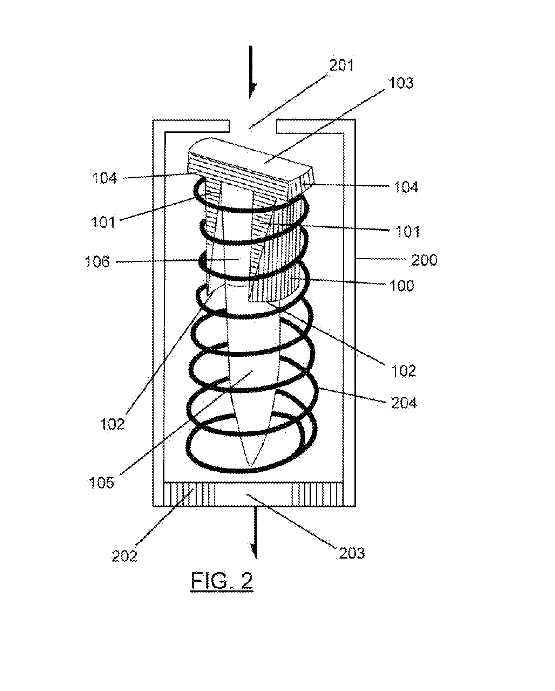

Figure 2 shows a side view of a needle-type stepped cylindrical stopper (100), according to the present invention, for automatically controlling the water consumption in pipelines, for use in automatic savers and pressure-sensitive flow controllers; needle-type stepped cylindrical stopper (100) having in the upper section two inclined symmetrical lateral planes (101) which begin at the step (102) and end in a flat section (103) of 2-3 millimeters wide as maximum having the flange (104) that serves as a stop to a conical spring (204), the needle-type stepped cylindrical stopper (100) is housed inside the body (200) of any design of automatic water-saving and pressure-sensitive flow controller having a fluid inlet hole (201). Below the step (102) in the lower section of the needle-type stepped cylindrical stopper (100) is the needle (105). In the two inclined symmetrical lateral planes (101) are the slots (106) to automatically control the water consumption. Figure 3 shows a front view of a needle-type stepped cylindrical stopper 300) for automatic control of water consumption. In the other embodiment, the needle-type stepped cylindrical stopper (100) has an upper needle (301) beginning at the step (302) and ending in a section that has at the tip, the slot (304) that serves as a retention for a conical spring (204), the needle-type stepped cylindrical stopper 300) which is housed inside the body (200) according to Figure 2 of any design of the automatic water-saving and pressure-sensitive flow controller device having in the lower section the needle (305) which controls the minimum water consumption of 4.0 liters per minute at a minimum static pressure of 0.2 kilograms per square centimeter. In the upper needle (301) are two symmetrical slots (306) at 180 degrees one to another. When the flat section of the step (102) of the needle-type stepped cylindrical stopper (100) is in contact according to Figures 1 and 2, as well as the step (302) of the needle-type stepped cylindrical stopper 300) as in Figure 3 with the flow controller washer (202), the water begins to flow through the slots (106) and (306).

## Claims

1. Needle-type stepped cylindrical stopper (100) and (300) in two embodiments, for automatic control of water consumption, **characterized in that** each one has two sections, which in each embodiment uses in the lower part, one flow controller washer. In one embodiment it has in the upper section, two inclined symmetrical outer planes (101), such planes begin at the step (102) and end in a flat section (103) of 2-3 millimeters wide as maximum that the step (104) has, in order to retain a conical spring (204).

2. Needle-type stepped cylindrical stopper (100) as the previous Claim, **characterized in that** such stopper has two slots (106), one on each plane (101).

3. In another embodiment, the needle-type stepped cylindrical stopper (300) as the first Claim, **characterized in that** such stopper has in the upper section a needle (301).

4. Needle-type stepped cylindrical stopper (300) as Claims 1 and 3, **characterized in that** has in the upper section a needle (301), which has almost at the tip of the same, a box or slot (304) to retain a conical spring (204).

5. Needle-type stepped cylindrical stopper (300) as Claims 1, 3 and 4 **characterized in that** the same has in the upper needle (301), two symmetrical slots (306) at 180 degrees.

6. Needle-type stepped cylindrical stopper (300) as claims 1 and 4 **characterized in that** in both embodiments has a conical spring (204).

7. Needle-type stepped cylindrical stopper (100) and (300) as claims 1 to 6 **characterized in that** in both embodiments, has a water flow controller washer.

## Amended claims

### Amended claims under Art. 19.1 PCT

1. Needle-type stepped cylindrical stopper (100) and (300) in two embodiments, for automatic control of water consumption, **characterized in that** each one has two sections which in each embodiment uses in the lower part, one flow controller washer, having in one embodiment, in the upper section, two inclined symmetrical outer planes (101), such planes begin at the step (102) and end in a flat section (103) of 2-3 millimeters wide as maximum that the step (104) has, in order to retain a conical spring (204),.having each one of the two planes, two slots (106).

2. Needle-type stepped cylindrical stopper (300) as the Claim 1, **characterized in that** such stopper has in the upper section a needle (301) having almost at the tip a box or slot (304) in order to retain a conical spring (204).

3. Needle-type stepped cylindrical stopper 300) as Claims 1 and 2 **characterized in that** such stopper has in the upper needle (301), two symmetrical slots (306) at 180 degrees.

4. Needle-type stepped cylindrical stopper (100) and (300) as Claims 1 and 2 **characterized in that** such stopper has in both embodiments a conical spring (204).

5. Needle-type stepped cylindrical stopper (100) and (300) as Claims 1 to 4 **characterized in that** such stopper has in the two embodiments a water flow controller washer.
